# EUROPÄISCHE PATENTSCHRIFT

(11) **EP 2 848 903 B1**
(45) Veröffentlichungstag und Bekanntmachung des Hinweises auf die Patenterteilung: **10.05.2017**
(21) Anmeldenummer: 14184862.2
(22) Anmeldetag: 16.09.2014
(51) Int. Cl.: G01G 23/02, B65D 19/12

(54) **Gitterklappe**
Grid flap
Volet grillagé

(30) Priorität: 16.09.2013 DE 102013218518
(43) Veröffentlichungstag der Anmeldung: 18.03.2015
(73) Patentinhaber: Multipond Wägetechnik GmbH, 84478 Waldkraiburg (DE)
(72) Erfinder: Peters, Andreas, 84544 Aschau am Inn (DE)
(74) Vertreter: Prüfer & Partner mbB Patentanwälte · Rechtsanwälte

(56) Entgegenhaltungen:
- AU-B2- 654 609
- DE-A1- 2 460 846
- DE-A1- 4 410 518
- DE-A1- 10 137 180
- DE-U1- 9 309 927

## Beschreibung

Die Erfindung betrifft eine Gitterklappe, insbesondere eine Gitterklappe für Abfüll- und Wägevorrichtungen, wie sie im Bereich der Lebensmitteltechnologie eingesetzt werden.

Bei Abfüll- und Wägeanlagen sind Behälter und Container bekannt, welche oftmals synchron betriebene Öffnungsklappen aufweisen. Je nach Produktanforderung können solche Öffnungsklappen als Gitterklappen ausgestaltet sein. Dies ist insbesondere dann von Vorteil, wenn das abzufüllende bzw. das abzuwiegende Erzeugnis eine klebrige Beschaffenheit aufweist. In einem solchen Fall sollten Oberflächen von Bauteilen, mit welchen das Produkt in Berührung kommt, möglichst gering gehalten werden, um ein Anhaften zu vermeiden.

Das Vorsehen eines Gitters mit einer Mehrzahl von nebeneinander oder übereinander angeordneten Streben ermöglicht es, den oben genannten Anforderungen nachzukommen.

Aus dem Stand der Technik sind bereits solche Gitterklappen bekannt. Diese können im Wesentlichen aus zwei Blechplatten bestehen, zwischen welchen ein Schüttgitter eingeklemmt wird. Eine weitere bekannte Ausgestaltung der Gitterklappen betrifft solche, die einen Kunststoffrahmen aufweisen, über den ein Drahtgitter gebogen wird. Zur besseren Befestigung des Gitters an dem Kunststoffrahmen wird der Kunststoff an entsprechenden Stellen aufgeschmolzen, worin das Drahtgitter dann hineingedrückt wird.

Ein wesentlicher Nachteil bei der Verwendung von Kunststoff ist jedoch darin zu sehen, dass beispielsweise kristalline Güter meist einen Abrieb der Kunststoffoberfläche zur Folge haben, wodurch es zu Kunststoff-Rückständen in den Lebensmitteln kommen kann. Des Weiteren werden Kunststoffteile schnell brüchig und unterliegen Verformungen. Dies gilt insbesondere dann, wenn man die Kunststoffteile mit hohen Temperaturen zu reinigen versucht, was hygienische Prozessbedingungen eigentlich unmöglich macht.

Weiterhin sind Gitterklappen bekannt, bei denen ein Drahtgitter am äußeren Rahmen angeschweißt ist, wie z.B. in AU 654609 B2 offenbart.

Zwar werden beide oben beschriebenen Gitterklappen-Arten oftmals nur in Abfüll- und Wägeanlagen für mikrobiell wenig anfällige Lebensmittel zum Einsatz gebracht, wodurch die Anforderungen an das Hygenic Design relativ gering sind, dennoch kann eine optimale Lebensmittelsicherheit nur dann gewährleistet werden, wenn das Bauteil so gefertigt ist, dass keine einzelnen Drahtenden und scharfkantigen Ecken überstehen, an denen Lebensmittelreste hängen bleiben können, oder aber keine schlecht zu reinigenden Spalten zwischen Draht und Rahmen entstehen, in welchen sich ebenfalls Produktreste sammeln können. Auch die Bildung von Hohlräumen sollte aus hygienischen Gesichtspunkten vermieden werden. Dieses Problem stellt sich jedoch insbesondere bei den oben genannten Gitterklappen dar, die aus Blechplatten gefertigt sind, wobei zwischen den Blechplatten ein Gitter angeordnet wird.

Des Weiteren sind die bekannten Gitterklappen nicht für eine maschinelle Serienfertigung geeignet und müssen einzeln von Hand gefertigt werden, was den Nachteil mit sich bringt, dass die Qualität des Bauteils von der Geschicklichkeit und Erfahrung des Handwerkers abhängt und dadurch stark schwanken kann. Der Erfindung liegt daher die Aufgabe zugrunde, eine Gitterklappe für eine Abfüll- oder Wägeanlage bereitzustellen, die die oben aufgeführten Probleme umgeht.

Diese Aufgabe wird durch eine Vorrichtung gemäß Anspruch 1, einem Verfahren gemäß Anspruch 6 sowie eine Verwendung gemäß Anspruch 11 erfüllt. Weitere vorteilhafte Ausführungen sind Gegenstand der Unteransprüche.

Die Erfindung stellt eine Gitterklappe für Abfüll- oder Wägeanlagen, insbesondere im Bereich der Lebensmittelverarbeitung bereit, welche einen Rahmen aufweist, auf dem ein Gitter gespannt ist. Sowohl Rahmen als auch Gitter sind vorzugsweise aus Metall gefertigt. Beide können auch aus demselben Material gefertigt sein. Es ist in jedem Fall erforderlich, dass das Drahtgitter an dem Rahmen durch Schweißen verbunden werden kann.

Das Gitter ist dabei so vorgesehen, dass es eine Mehrzahl an Streben aufweist, welche an deren jeweiligen Endabschnitten mit dem Rahmen verschweißt werden. Die Streben können dabei horizontal oder vertikal parallel zueinander angeordnet sein. In einer Ausführungsform der Erfindung kann ein erster Teil der Streben horizontal und ein zweiter Teil der Streben vertikal angeordnet sein, wobei die jeweils ersten und zweiten Teile der Streben dann kreuzweise übereinander verlegt werden können. In einer besonders bevorzugten Ausführungsform der Erfindung sind ein erster Teil der Streben horizontal und ein zweiter Teil der Streben vertikal angeordnet und maschenartig miteinander verwoben. In jeder der oben genannten Ausführungsformen wird das Gitter entlang einer Peripherie des Metallrahmens mit diesem durch Schweißen verbunden.

Ein Verfahren zur Herstellung einer bevorzugten Gitterklappe soll im Folgenden beschrieben werden:
Zunächst wird eine Mehrzahl an Drahtstreben bereitgestellt, von welcher vorzugsweise ein erster Teil horizontal und ein zweiter Teil vertikal in einem jeweils vorbestimmten Abstand zueinander ausgerichtet wird. Die Drahtstreben werden im Anschluss so miteinander verwoben, dass ein netzartiges Drahtgitter entsteht. Das Drahtgitter wird nun zugeschnitten und so an den Metallrahmen angepasst, dass jedes Drahtende auf dem Metallrahmen aufliegt und mit ihm verschweißt werden kann. Wird ein vorgefertigtes Drahtgitter verwendet, wird nach dem Zuschnitt an jedem Rand die jeweils letzte Querstrebe entfernt, so dass die Endabschnitte der einzelnen Streben länger sind, als eine Maschenweite der Gitterstruktur. Um eine saubere Verschweißung eines jeden der Drahtenden mit dem Metallrahmen zu ermöglichen, wird zum einen jedes Drahtende so vorgesehen, dass es mit einer vorbestimmten Länge auf dem Metallrahmen aufliegt. Zusätzlich kann jedes der Drahtenden so ausgerichtet werden, dass es flach auf dem Rahmen anliegt, weiter vorzugsweise sogar so gebogen, dass es in Richtung des Metallrahmens zeigt und bereits somit für einen sicheren Kontakt mit dem Rahmen sorgt. Des Weiteren ist das Drahtgitter vorzugsweise so angepasst, dass die jeweils letzte Querstrebe der horizontal und vertikal angeordneten Streben noch auf dem Rahmen aufliegt.

Der Rahmen wird auf eine Magnetvorrichtung platziert. Hierzu kann in der Magnetvorrichtung eine Schablone vorgesehen sein, in welche der Rahmen passgenau eingesetzt werden kann. Es können jedoch auch entsprechende Aussparungen im Rahmen selbst vorgesehen sein, in welche geeignete Fixiermittel angebracht werden können, um den Rahmen an der Magnetvorrichtung zu sichern. Anschließend wird der vorbereitete Gitterzuschnitt auf dem Rahmen angepasst und ebenfalls durch geeignete Mittel fixiert. Mittels eines Elektromagneten werden die zu verschweißenden Teile zusammengedrückt. Die freien Drahtenden werden dann durch Schweißen, vorzugsweise durch Laserschweißen mit dem Metallrahmen verbunden.

Durch das Vorsehen der jeweils letzten Querstreben so, dass sie auf dem Rahmen aufliegen, sowie durch das Aufdrücken des Gitters auf den Rahmen beim Schweißvorgang selbst, wird eine permanente statische Vorspannkraft der Drahtenden sowie der letzten Querstrebe gegen den Rahmen erreicht, die einer schwellenden Belastung der Drahtenden beim Einsatz der Gitterklappe im Betrieb entgegenwirken kann. Die einzelnen Drähte sowie insbesondere die Drahtenden sind so im Normalbetrieb keiner elastischen Verformung ausgesetzt.

Um eine elastische Verformung des Gitters durch den Elektromagneten vorzubeugen und die Festigkeit der Gitterklappe insgesamt zu erhöhen, kann der Rahmen eine Unterkonstruktion aufweisen, die vorzugsweise einstückig mit dem Rahmen ausgebildet ist. Die Unterkonstruktion kann dabei jede beliebige Form aufweisen und ist vorzugsweise durch Ausschneiden entsprechender Teile aus einer Blech- oder massiven Metallplatte mit einem Laserschneider gebildet. Die dabei entstehenden Aussparungen sollten so dimensioniert sein, dass das Gitter gleichmäßig auf der Unterkonstruktion aufliegt. Es ist auch möglich, das Gitter mit der Unterkonstruktion zu verschweißen.

Des Weiteren sind an dem Rahmen vorzugsweise entsprechende Befestigungsmittel angebracht, an denen die Gitterklappe schwenkbar gelagert werden kann. Ferner kann es sinnvoll sein, im Rahmen entsprechende Aussparungen durch Ausschneiden mit einem Laserschneider vorzusehen, die eine Gewichtsersparnis der Gitterklappe insgesamt ermöglichen.

Die Erfindung wird im Folgenden anhand eines Ausführungsbeispiels unter Bezugnahme auf die Figuren erläutert.
Fig. 1 zeigt eine Schrägansicht der erfindungsgemäßen Gitterklappe
Fig. 2 zeigt eine Vorderansicht des erfindungsgemäßen Rahmens
Fig. 3 zeigt eine Schrägansicht der erfindungsgemäßen Gitterklappe an einer Wäge- oder Abfüllvorrichtung

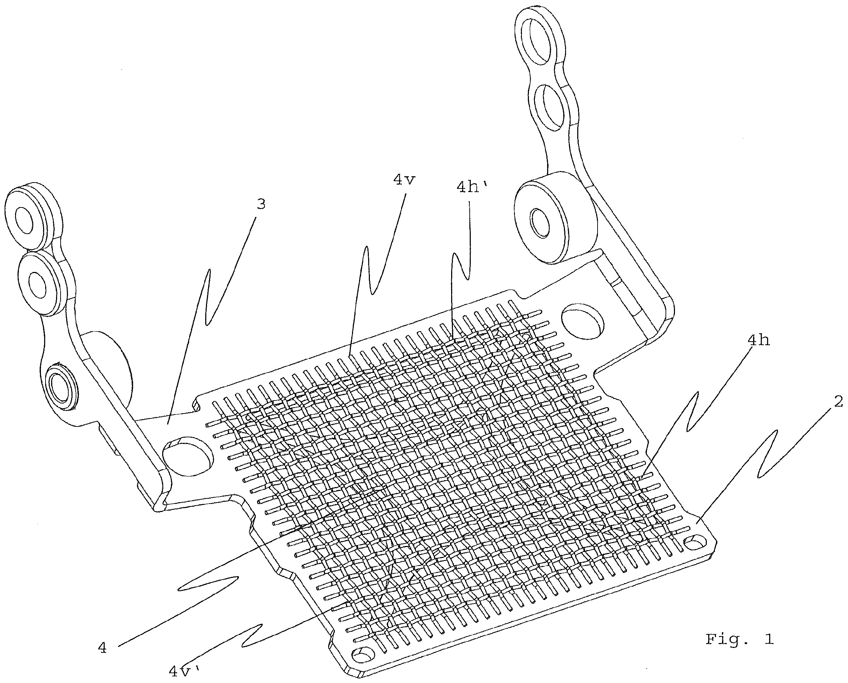

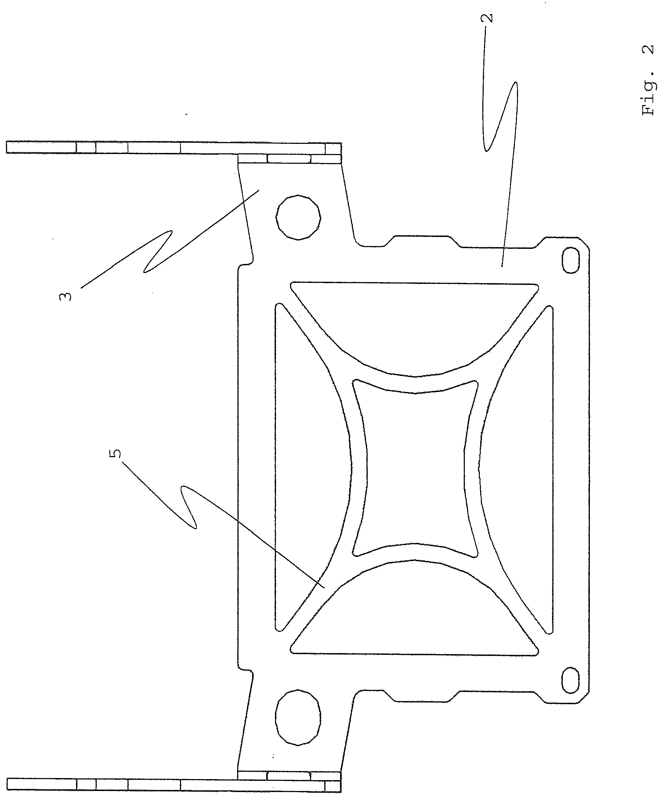

Wie in Fig. 1 zu sehen ist, weist die erfindungsgemäße Gitterklappe 1 einen rechteckigen Rahmen 2 auf. Am oberen Ende des Rahmens sind seitlich in Bezug auf die kürzere Seite zwei sich gegenüberliegende Haltearme 3 vorgesehen, die vorzugsweise abgekantet sind und als Befestigungsmittel fungieren. An dem abgekanteten Abschnitt eines jeden der Haltearme 3 sind Öffnungen vorgesehen, an welchen die Gitterklappe, beispielsweise mit Hilfe von Zapfen schwenkbar an einem Behälter einer Abfüll- oder Wägevorrichtung gelagert werden kann. Die Öffnungen an den seitlich abstehenden Abschnitten sind vorgesehen, um den Metallrahmen 2 an einer Magnetvorrichtung durch geeignete Mittel zu fixieren. Des Weiteren weist der Rahmen eine Gitter-Unterkonstruktion 5 auf, die in Figur 2 noch näher beschrieben wird.

Das Gitter 4 selbst besteht aus einer Mehrzahl von horizontal 4h und vertikal 4v angeordneten Drahtstreben, die netzartig miteinander verwoben sind. Die jeweils äußersten der entsprechenden Quer- und Längsstreben 4h' und 4v' sind so vorgesehen, dass sie gerade noch auf dem Rahmen 2 aufliegen. Dadurch wird eine Vorspannkraft erreicht, die wesentlich zur Festigkeit des Gitters 4 beiträgt. Jedes Ende einer jeden der Drahtstreben 4h und 4v ist abgeflacht und jeweils entlang einer Peripherie des Rahmens 2 mit diesem verschweißt. Durch die maschenartige Verwebung der Drahtstreben 4h und 4v miteinander und dem Verschweißen der jeweiligen Drahtenden auf dem Metallrahmen 2 entsteht eine stabile und prozesssichere Gitterkonstruktion.

Wie aus Figur 2 zu sehen ist, weist der Rahmen 2 eine Gitterunterkonstruktion 5 in Form von kreisbogensegmentartig ausgebildeten Verstrebungen auf, die einstückig mit dem Rahmen 2 ausgebildet sind. Die Verstrebungen sind durch Ausschneiden entsprechender Stücke aus dem Metallrahmen 2 durch einen Laserschneider gebildet.

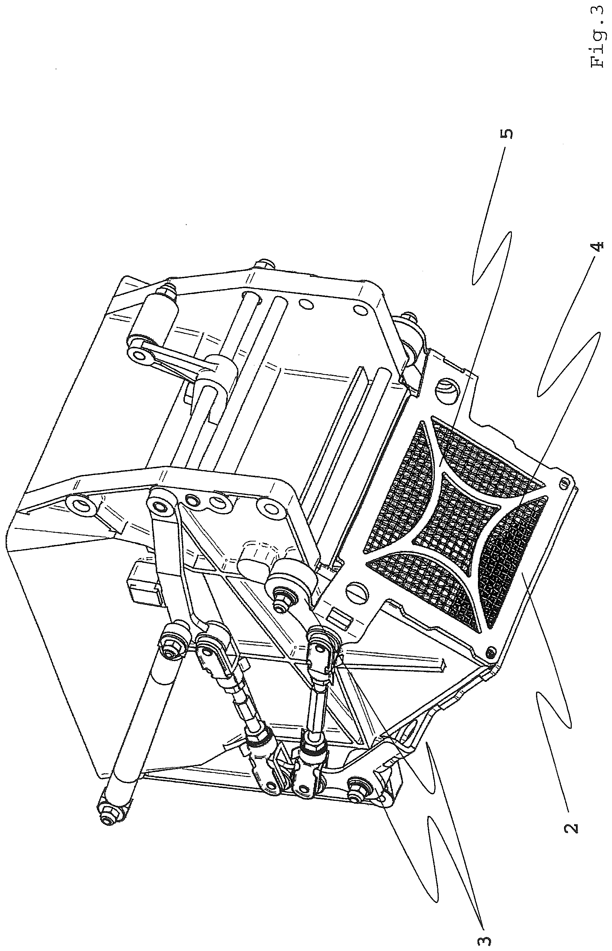

Die erfindungsgemäßen Gitterklappen 1 können an den Haltearmen 3 mittels geeigneter Befestigungsmittel an einem Behälter einer Wäge- oder Abfüllvorrichtung schwenkbar gelagert sein, wie es in Figur 3 zu sehen ist. Dabei öffnen oder verschließen die Klappen 1 synchron den trichterförmigen Behälter der Wäge- oder Abfüllvorrichtung.

Bei der oben beschriebenen Gitterklappe sinkt die Gefahr eines Drahtbruches trotz kontinuierlicher Beanspruchung signifikant und eine hohe Produktsicherheit kann gewährleistet werden.

## Patentansprüche

1. Gitterklappe (1) für Abfüll- und Wägevorrichtungen, wie sie im Bereich der Lebensmitteltechnologie eingesetzt werden, aufweisend:
ein Metallgitter (4), wobei das Gitter (4) eine Mehrzahl von Streben (4h, 4v) aufweist, und
einen Metallrahmen (2), welcher das Gitter (4) umgibt, wobei die jeweiligen Endabschnitte der Gitterstreben (4h, 4v) an dem Rahmen (2) fixiert sind,
wobei
der Rahmen (2) eine Unterkonstruktion (5) für das Gitter aufweist,
**dadurch gekennzeichnet, dass**
ein Endabschnitt einer jeden Drahtstrebe (4h, 4v) nach der letzten Querstrebe länger als eine Maschenweite des Gitters (4) ist und
das Metallgitter (4) so angepasst ist, dass die jeweils letzte Querstrebe der horizontal (4h) und vertikal (4v) angeordneten Streben noch auf dem Rahmen aufliegt, die Streben (4h, 4v) parallel zueinander angeordnet sind und das Gitter (4) entlang einer Peripherie des Metallrahmens (2) mit diesem durch Schweißen verbunden ist,
wobei jedes Ende einer jeden der Drahtstreben (4h, 4v) abgeflacht ist.

2. Gitterklappe nach Anspruch 1, wobei die Unterkonstruktion einstückig mit dem Rahmen ausgebildet ist.

3. Gitterklappe nach der Ansprüche 1 oder 2, wobei ein erster Teil der Streben (4h) horizontal und ein zweiter Teil der Streben (4v) vertikal angeordnet ist und die Streben (4h, 4v) kreuzweise übereinander verlegt sind und eine Gitterstruktur bilden.

4. Gitterklappe nach einem der Ansprüche 1 oder 2, wobei ein erster Teil der Streben (4h) horizontal und ein zweiter Teil der Streben (4v) vertikal angeordnet ist und die Streben (4h, 4v) maschenartig miteinander verwoben sind und eine Gitterstruktur bilden.

5. Gitterklappe nach einem der vorhergehenden Ansprüche, wobei ein Endabschnitt einer jeden Drahtstrebe (4h, 4v), der an dem Metallrahmen (2) fixiert ist, parallel zur Ebene des Rahmens ausgebildet ist.

6. Verfahren zum Herstellen einer Gitterklappe nach einem der Ansprüche 1 bis 6 mit den folgenden Schritten:
- Bereitstellen eines Drahtgitters mit einer Gitterstruktur,
- Bereitstellen eines Metallrahmens,
**dadurch gekennzeichnet, dass** das Verfahren weiterhin die folgenden Schritte umfasst:
- Anpassen des Drahtgitters auf den Metallrahmen durch Zuschneiden, so dass zum einen die Drahtenden mit einer vorbestimmten Länge auf dem Rahmen aufliegen, zum anderen die jeweils letzte Drahtstrebe der horizontal und vertikal angeordneten Streben auf dem Rahmen aufliegt,
- Fixieren des Rahmens auf eine Magnetvorrichtung,
- Anordnen des Drahtgitters auf dem Rahmen und/oder der Magnetvorrichtung,
- Aufdrücken des Drahtgitters auf den Metallrahmen durch einen Elektromagneten,
- Verschweißen der freien Drahtenden mit dem Metallrahmen.

7. Verfahren nach Anspruch 6, wobei dem Zuschneiden des Drahtgitters ein Herausziehen einer jeweils letzten Drahtstrebe an jeder Seite des Gitters folgt, um Drahtendabschnitte vorzusehen, die länger sind, als eine Maschenweite des Gitters.

8. Verfahren nach einem der Ansprüche 6 oder 7, wobei das Fixieren des Drahtgitters an dem Metallrahmen durch einmaliges Abfahren aller Drahtenden mit einem Schweißlaser erfolgt.

9. Verfahren nach einem der Ansprüche 6 bis 8, wobei die Drahtenden vor dem Verschweißen parallel zur Ebene des Rahmens ausgerichtet werden.

10. Verfahren nach einem der Ansprüche 6 bis 8, wobei die Drahtenden vor dem Verschweißen so umgebogen werden, dass jedes der Drahtenden mit einer Krümmung zum Metallrahmen hin vorgesehen ist.

11. Verwendung einer Gitterklappe gemäß einem der Ansprüche 1 bis 6 in einer Abfüll- oder Wägevorrichtung.

## Claims

1. Grid flap (1) for filling devices or scales, used in the field of food technology, comprising:
a metal grid (4), wherein the grid (4) comprises a plurality of braces (4h, 4v), and
a metal frame (2), which surrounds the grid (4), wherein the respective end sections of the grid braces (4h, 4v) are fixed on the frame (2),
wherein the frame (2) comprises a sub-structure (5) for the grid,
**characterized in that** an end section of each of the braces (4h, 4v) after the last cross brace is longer than a mesh width of the grid (4), and
the metal grid (4) is aligned in a way that a respective last cross brace of the horizontally (4h) and the vertically (4v) aligned braces still rests on the frame,
the braces (4h, 4v) are aligned to each other in parallel, and the grid (4) is connected along a periphery of the metal frame (2) with it by welding,
wherein each end of each of the wire braces (4h, 4v) is flattened.

2. Grid flap according to claim 1, wherein the sub-structure is integrally formed with the frame.

3. Grid flap according to any one of claims 1 or 2, wherein a first part of the braces (4h) is horizontally aligned and a second part of the braces (4v) is vertically aligned, and the braces (4h, 4v) are crosswise arranged on top of each other, and form a grid structure.

4. Grid flap according to any one of claims 1 or 2, wherein a first part of the braces (4h) is horizontally aligned and the second part of the braces (4v) is vertically aligned, and the braces (4h, 4v) are interwoven with each other in a mesh-like structure, and form a grid structure.

5. Grid flap according to any one of the previous claims, wherein an end section of each of the wire braces (4h, 4v), which is fixed to the metal frame (2), is formed in parallel with the plane of the frame.

6. Method for manufacturing a grid flap according to any one of claims 1 to 5, wherein the method comprises the steps of:
- providing a wire netting having a grid structure,
- providing of a metal frame,
**characterized in that** the method further comprises the following steps:
- adapting the wire netting to the metal frame by cutting, so that firstly the wire ends with a predetermined length rest on the frame, and secondly, the respective last wire brace of the horizontally and vertically aligned braces lies on the frame,
- fixing the frame on a magnet device,
- arranging the wire netting on the frame and/or the magnet device,
- pressing the wire netting onto the metal frame by an electric magnet,
- welding the free wire ends with the metal frame.

7. Method according to claim 6, wherein a pulling step of a respectively last wire brace on each side of the grid follows the cutting of the wire netting, to provide wire end sections, which are longer than a mesh width of the grid.

8. Method according to any of claims 6 or 7, wherein the fixing step of the wire netting on the metal frame is effected via a single-contact tracing of all wire ends with a laser welding device.

9. Method according to any of claims 6 to 8, wherein the wire ends are aligned in parallel with the plane of the frame prior to the welding step.

10. Method according to any of claims 6 to 8, wherein the wire ends are bent prior to welding in a way that each of the wire ends is provided with a curve pointing in the direction of the metal frame.

11. Use of a grid flap according to any one of claims 1 to 5 in a filling device or scale.

## Revendications

1. Volet grillagé (1) pour des dispositifs de transvasement et de pesage, ainsi qu'ils sont utilisés dans le domaine de la technologie alimentaire, présentant :
une grille en métal (4), dans lequel la grille (4) présente une multitude d'entretoises (4h, 4v), et
un châssis en métal (2), qui entoure la grille (4), dans lequel les segments d'extrémité respectifs des entretoises de grille (4h, 4v) sont fixés au niveau du châssis (2),
dans lequel
le châssis (2) présente une sous-structure (5) pour le grillage,
**caractérisé en ce que**
un segment d'extrémité de chaque entretoise en fil métallique (4h, 4v) après la dernière entretoise transversale est plus long qu'une largeur de maille de la grille (4), et
la grille en métal (4) est adaptée de telle sorte que la dernière entretoise transversale concernée des entretoises disposées de manière horizontale (4h) et de manière verticale (4v) repose encore sur le châssis, **en ce que** les entretoises (4h, 4v) sont disposées de manière parallèle les unes par rapport aux autres, et **en ce que** la grille (4) est reliée par soudage au châssis en métal (2) le long d'une périphérie de ce dernier,
dans lequel chaque extrémité de chaque entretoise en fil métallique (4h, 4v) est aplatie.

2. Volet grillagé selon la revendication 1, dans lequel la sous-structure est réalisée d'un seul tenant avec le châssis.

3. Volet grillagé selon les revendications 1 ou 2, dans lequel une première partie des entretoises (4h) est disposée de manière horizontale et une deuxième partie des entretoises (4v) est disposée de manière verticale, et les entretoises (4h, 4v) sont posées les unes au-dessus des autres de manière croisée et forment une structure grillagée.

4. Volet grillagé selon l'une quelconque des revendications 1 ou 2, dans lequel une première partie des entretoises (4h) est disposée de manière horizontale et une deuxième partie des entretoises (4v) est disposée de manière verticale, et les entretoises (4h, 4v) sont tissées les unes aux autres à la manière de mailles et forment une structure grillagée.

5. Volet grillagé selon l'une quelconque des revendications précédentes, dans lequel un segment d'extrémité de chaque entretoise en fil métallique (4h, 4v), qui est fixé au niveau du châssis en métal (2), est réalisé de manière parallèle par rapport au plan du châssis.

6. Procédé servant à fabriquer un volet grillagé selon l'une quelconque des revendications 1 à 5,
avec les étapes suivantes consistant à :
- fournir un grillage en fil métallique pourvu d'une structure grillagée,
- fournir un châssis en métal,
**caractérisé en ce que** le procédé comprend par ailleurs les étapes suivantes consistant à :
- adapter la grille en fil métallique au châssis en métal par une découpe à la bonne longueur, de sorte que d'une part les extrémités de fil métallique reposent, selon une longueur préalablement déterminée, sur le châssis et que, d'autre part, la dernière entretoise en fil métallique concernée des entretoises disposées de manière horizontale et de manière verticale repose sur le châssis,
- fixer le châssis sur un dispositif aimanté,
- disposer la grille en fil métallique sur le châssis et/ou sur le dispositif aimanté,
- presser la grille en fil métallique sur le châssis en métal par un électroaimant,
- souder les extrémités de fil métallique libres au châssis en métal.

7. Procédé selon la revendication 6, dans lequel un retrait d'une dernière entretoise en fil métallique concernée au niveau de chaque côté de la grille suit le découpage à la bonne longueur de la grille en fil métallique afin de prévoir des segments d'extrémité de fil métallique qui sont plus longs qu'une largeur de maille de la grille.

8. Procédé selon l'une quelconque des revendications 6 ou 7, dans lequel la fixation de la grille en fil métallique au niveau du châssis en métal est effectuée en arrêtant toutes les extrémités de fil métallique avec un laser de soudage.

9. Procédé selon l'une quelconque des revendications 6 à 8, dans lequel les extrémités de fil métallique sont orientées, avant le soudage, de manière parallèle par rapport au plan du châssis.

10. Procédé selon l'une quelconque des revendications 6 à 8, dans lequel les extrémités de fil métallique sont repliées avant le soudage de telle sorte que chacune des extrémités de fil métallique est prévue avec une courbure en direction du châssis en métal.

11. Utilisation d'un volet grillagé selon l'une quelconque des revendications 1 à 5 dans un dispositif de transvasement ou de pesage.
